# EUROPEAN PATENT APPLICATION

(11) **EP 2 607 214 A1**
(43) Date of publication of application: **26.06.2013**
(21) Application number: 11195113.3
(22) Date of filing: 22.12.2011
(51) Int. Cl.: B62D 35/00, B62D 37/02

(54) **Ground vehicle with aerodynamical oscillator**

(71) Applicant: Creo Dynamics AB, 582 16 Linköping (SE)
(72) Inventor: Kristiansson, Gustav, SE-582 16 Linköping (SE)
(74) Representative: Wihlsson, Joakim Per Magnus

(57) **Abstract**

A ground vehicle (100) has a body with a measurement zone (110b) and at least one disrupting means (120b). The measurement zone (110b) is arranged upstream of the disrupting means (120b) and repeatedly registers data (D) representing at least one characteristic parameter of an airflow (F) around the vehicle when the vehicle moves. In response to the data (D), a controller generates control signal(s) controlling the disrupting means (120b) to perturbate the airflow (F) in such a manner that a drag on the vehicle is lower than if the vehicle had travelled at the same speed without the disrupting means (120b). The disrupting means (120b) includes at least one flexible membrane for producing an oscillating air mass, thus injecting energy into the airflow (F) around the vehicle, so that a flow separation line is shifted from an original position (FSL_{Ob}) downstream in the direction of the airflow (F) along the body to an adjusted position (FSL_{Ab}). The flow separation line is a line along which the airflow (F) detaches from the body and behind which air vortices (V) are created. The original position (FSL_{Ob}) is the line along which the airflow (F) would detach if said energy had not been injected into the airflow (F) around the vehicle.

## Description

### FIELD OF INVENTION

The present invention relates generally to the enhancement of aerodynamic properties of vehicles, such as trucks, busses, trains, trailers, passenger cars, hovercrafts and motorcycles. More particularly, the invention relates to a ground vehicle according to the preamble of claim 1.

### THE BACKGROUND OF THE INVENTION AND PRIOR ART

The prior art includes various examples of solutions for improving the aerodynamic properties of a so-called bluff body, i.e. a non-streamlined shape that produces considerable resistance when moving through the air, or a similar medium. Typically, a region of separated airflow occurs over a large portion of the surface of a bluff body. This results in a high drag force and a large wake region. The airflow often exhibits unsteadiness in the form of periodic vortex formation and shedding. Naturally, these effects are undesired. Therefore, to obtain low energy consumption, bluff-body vehicle shapes should generally be avoided. However, for ground vehicles (trucks, busses and trailers in particular) various regulations place restrictions on the vehicles' maximum outer dimensions. Thus, in order to economize the available vehicle volume, heavy vehicles are normally designed with a shape which to a large extent is a bluff body, i.e. where the front and back surfaces are essentially flat and vertical walls. To reduce the known drawbacks of such a vehicle shape, airflow control systems may be used to improve the aerodynamics.

However, also more streamlined vehicles may benefit from active drag reduction systems. The document US, 5,908,217 describes a pneumatic aerodynamic control and drag-reduction system for vehicles, such as passenger cars. The system reduces flow separation at the rear portion of a moving vehicle by discharging air at this vehicle portion. Blowing outlets are arranged to discharge the air through one or more tangential slots which extend transversely of the upper and/or lower rear portion of the vehicle. Moreover, differential right/left blowing systems may be used to counteract lateral and directional instabilities, for instance when the vehicle is exposed to side winds.

US 4,516,747 and WO 2008/069937 reveal examples of designs wherein sets of sensors and associated actuators are used to measure and influence an airflow around a vehicle in order to change the airflow behavior in a desired manner.

US 5,961,080 describes a system for efficient control of flow separation using a driven flexible wall. Here, an array of combined sensors/transducers is arranged under the flexible wall to measure the properties of an airflow around a vehicle. Said array also influences the airflow via mechanical manipulation of the flexible wall.

US 2011/0035119 describes a solution for drag reduction in moving objects, such as ground vehicles. In one embodiment a sensor is mounted on the roof of a passenger compartment and eddy disruptor elements are installed on opposing sides of surfaces adjacent to the passenger compartment downstream of the sensor. The eddy disruptor elements are represented by pivotable panels whose respective angle towards the vehicle body is controlled in response signals from the sensor.

### PROBLEMS ASSOCIATED WITH THE PRIOR ART

Although the known solutions are advantageous, there is still room for improvements in terms of efficiency and reduced complexity of the drag reduction system.

### SUMMARY OF THE INVENTION

The object of the invention is to mitigate the above-described aerodynamic problems and accomplish a further improved active system for reducing the drag on a ground vehicle in a discrete and yet efficient manner.

According to the invention, the object is achieved by the initially described vehicle, wherein the disrupting means includes at least one flexible membrane configured to be controlled so as to produce an oscillating air mass injecting energy into the airflow around the vehicle, so that a flow separation line is shifted from an original position downstream in the direction of the airflow along the body to an adjusted position. The flow separation line represents a line along which the airflow detaches from the body and behind which air vortices are created. The original position is here the line along which the airflow would detach if said energy had not been injected into the airflow around the vehicle.

This vehicle is advantageous because it enables an adaptive and immediate compensation for variations in the airflow around a vehicle while the vehicle travels through a surrounding air volume. Thus, a high-quality drag reduction can be achieved also under highly complex wind conditions, such as when the vehicle is exposed to buffing wind.

According to one preferred embodiment of the invention the vehicle is presumed to be associated with two or more different flow separation lines, each having a respective original position where a portion of the airflow would detach if no energy had been injected into the airflow around the vehicle. The controller is here configured to generate the control signals such that, in response to energy injected into the airflow by the disrupting means, the flow separation lines are shifted to a set of adjusted positions where the flow separation lines are positioned relative to one another aiming at attaining an equilibrated air-pressure behind the vehicle. Thereby, the controller may generate such control signals that an overall optimizing of the airflow is attained.

According to another preferred embodiment of the invention, the disrupting means is also arranged upstream of said original position for the flow separation line. Namely, such positioning of the disrupting means results in a much larger influence on the flow separation than any other positioning.

According to yet another preferred embodiment of the invention, the controller is configured to repeatedly update the at least one control signal in response to the registered data from the measurement zone. Preferably, for accuracy reasons, the control signals are updated with approximately the same frequency as the registered data are updated; say in the order of 5 Hz to 5 kHz.

According to still another preferred embodiment of the invention, the controller is specifically configured to: predict an airflow state behind the vehicle based on said registered data, compare the predicted airflow state with a desired airflow state behind the vehicle, and generate each of the at least one control signal with such respective value that a difference measure between the predicted and desired airflow states is expected to be minimized. Said prediction and generation of control signals are repeated at a frequency equivalent to the above-mentioned frequency at which data is registered in the measurement zone. Thereby, the drag is reduced very efficiently.

According to a further preferred embodiment of the invention, the vehicle body is presumed to have general front, top, rear, bottom and side surfaces, and a sensor area of the measurement zone coincides with an exterior component of the body facing upwards in such a manner that the sensor area forms a part of the general top surface. This is advantageous because thereby pressure fluctuations resulting from the airflow around the vehicle can be registered with high accuracy.

According to yet another preferred embodiment of the invention, a sensor area of the measurement zone is instead presumed to coincide with an exterior component of the vehicle body facing rearward in such a manner that the sensor area forms a part of the general rear surface. Such a sensor position is likewise beneficial from an accuracy point-of-view.

According to another preferred embodiment of the invention, the measurement zone includes an exchanging member movably attached to a frame member of the vehicle body via at least one sensor member configured to register reciprocating movements of the exchanging member relative to the frame member. Further preferably, the at least one sensor member includes a piezoelectric element and first and second strips are connected to the exchanging member in such a way that a relatively large movement of the exchanging member causes a relatively small movement of the piezoelectric element. This renders it possible to measure relatively large exchanging member movements via a comparatively compact sensor members.

According to still another preferred embodiment of the invention, the disrupting means includes at least one pulsator element configured to produce said oscillating air mass injecting energy into the airflow. Further preferably, the disrupting means contains a set of pulsator units. Each pulsator unit may have a cavity with an opening towards an exterior surface of the body. The cavity, in turn, includes at least one wall comprising a flexible membrane, the position of which is configured to be manipulated in response to one of the at least one control signal. As a result, air is caused to be sucked into or ejected from the cavity depending on a movement direction of the flexible membrane. This type of pulsator element provides a highly compact and efficient means to inject energy into the airflow around the vehicle.

According to yet another preferred embodiment of the invention each pulsator element includes at least one piezoelectric element configured to influence a position of said flexible membrane in response to at least one of the at least one control signal. Hence, the pulsator elements can be controlled in a reliable and resourceful manner.

According to an alternative embodiment of the invention, the disrupting means does not include an opening towards the exterior surface of the body. Instead, a principal membrane is arranged in parallel and essentially in level with the exterior surface of the body. The principal membrane is configured to flex in and out relative to the exterior surface of the body in response to at least one of the at least one control signal, so as to vibrate a boundary air layer, and thus inject energy into the airflow around the vehicle. Hence, the principal membrane may either be operated via at least one flexible membrane included in the cavity wall of a pulsator, or be operated directly in response to at least one piezoelectric element.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: shows a side view of a ground vehicle according to a first embodiment of the invention;
- Figure 2: shows a top view of the ground vehicle in Figure 1;
- Figure 3: illustrates in further detail the design of a rear section of the ground vehicle in Figure 1;
- Figure 4: shows an embodiment of a proposed measurement zone implemented in a roof window;
- Figures 5a, b: show disrupting means according embodiments of the invention, and
- Figure 6: shows a top view of the ground vehicle according to a second embodiment of the invention.

### DESCRIPTION OF PREFERRED EMBODIMENTS OF THE INVENTION

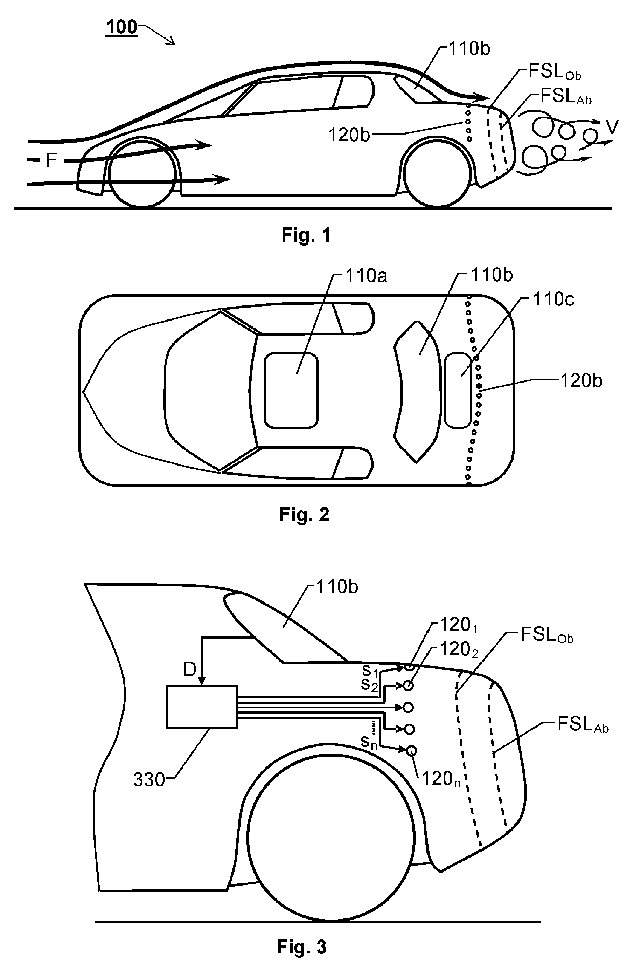

We refer initially to Figures 1 and 2, which show a side view and a top view respectively of a ground vehicle 100 in the form of a passenger car according to a first embodiment of the invention. Figure 3 illustrates, in further detail, the design of a rear section of the vehicle 100. The vehicle 100 has a body, where at least one measurement zone 110a, 110b and/or 110c is included. The vehicle body also contains at least one disrupting means 120b.

Each measurement zone 110a, 110b and 110c respectively is configured to repeatedly register data D representing at least one characteristic parameter of an airflow F (e.g. air pressure, shedding frequency, relative wind speed) around the vehicle 100 when the vehicle 100 moves. A controller 330 in the vehicle is configured to receive the registered data D, and in response thereto generate at least one control signal s₁, s₂, ..., sₙ.

The at least one disrupting means 120b is configured to receive the at least one control signal s₁, s₂, ... , sₙ, and based thereon, perturbate the airflow F around the vehicle 100 when the vehicle 100 travels at a particular speed in a forward direction in such a manner that a drag on the vehicle 100 is lower than if the vehicle 100 had travelled at this speed in the forward direction without the at least one disrupting means 120b. The measurement zone 110a that provides data D for controlling a given disrupting means 120b is arranged upstream of this disrupting means 120b relative to a direction of the airflow F. According to the invention, the disrupting means 120b may either include at least one pulsator element having a respective opening towards an exterior surface of the vehicle body; or include at least one pulsator element, where instead of an opening a principal membrane is arranged in parallel and essentially in level with the exterior surface of the body. The principal membrane is here configured to flex in and out relative to the exterior surface of the body so as to inject energy into the airflow (F) around the vehicle 100. Figure 3 shows an example where the disrupting means contains a set of pulsator elements 120₁, 120₂, ..., 120ₙ arranged along an essentially straight line extending from side to side across the vehicle 100 over its top and side body surfaces. However, according to the invention, any other (i.e. non-linear) arrangement of the pulsator elements 120₁, 120₂, ..., 120ₙ is equally well conceivable to attain the desired disruption of the airflow F.

The disrupting means 120b is configured to produce an oscillating air mass, which injects energy into the airflow F around the vehicle 100. The purpose of the injected energy is to manipulate the airflow F such that a flow separation line is shifted from an original position FSL_{Ob} downstream in the direction of the airflow F along the body to an adjusted position FSL_{Ab}. The flow separation line is a line along which the airflow F detaches from the body and behind which air vortices V are created. It is desirable that the strength of the air vortices V is minimized, since the air vortices V result in suction; which, in turn, counteracts the vehicle's 100 forward movement, thus causing a drag on the vehicle 100. The original position FSL_{Ob} is the line along which the airflow F would detach if no additional energy had been injected into the airflow F around the vehicle, and this detachment line is associated with a larger drag than the adjusted position FSL_{Ab}.

Preferably, the disrupting means 120b is arranged upstream of the original position FSL_{Ob} for the flow separation line, since this significantly improves the disrupting means' 120b possibility to influence the flow separation.

The proposed principle of registering airflow data D upstream of a location where it is desired to control the airflow F (i.e. around the original position FSL_{Ob} for the flow separation line) relies on the fact that, in a gaseous medium (such as air), the speed of sound represents the velocity at which mechanical information (i.e. pressure waves) propagates through the medium. Thus, provided that the vehicle 100 has a subsonic velocity, the movements of a given air particle will also influence the airflow *upstream* of the point where the air particle is located relative to the vehicle's 100 body. Hence, by adequate modeling, it is possible to estimate the behavior of an air particle downstream of a measurement point, such as downstream of the original position FSL_{Ob}, based on appropriate data registering D in the measurement zone 110a.

Consequently, according to one preferred embodiment of the invention, the controller 330 is configured to operate in the following iterative manner. The controller 330 predicts an airflow state behind the vehicle 100 based on the data D registered in the measurement zone 110b. The controller 330 compares the predicted airflow state with a desired airflow state behind the vehicle 100 (i.e. an airflow state where the strength of the vortices V is comparatively moderate). The controller 330 then generates each control signal s₁, s₂, ..., sₙ with such respective value that a difference measure between the predicted airflow state and the desired airflow state is expected to be minimized. Thereafter, the controller 330 renews its prediction of the airflow state, and so on. Preferably, the prediction and the generation of control signals s₁, s₂, ..., sₙ are repeated at a relatively high frequency. It is advantageous if the controller 330 is configured to repeatedly update the at least one control signal s₁, s₂, ... , sₙ in response to said registered data D from the measurement zone 110b at a frequency of 5 Hz to 5kHz. It is further preferable if the control signals s₁, s₂, ... , sₙ are updated with approximately the same frequency as the registered data D are updated. Typically, it is desirable that the updating frequency is adaptable and depends on the speed of the vehicle 100 and/or a measured wind speed, such that relatively high speeds correspond to comparatively high updating frequencies, and vice versa.

So-called fuzzy logic (i.e. logic implementing algorithms that can be made self learning) may be used in the controller 300 to model the dynamic system represented by a closed control loop including the data D registration in the measurement zone 110b, the prediction of the airflow state, and the generation of control signals s₁, s₂, ..., sₙ. To attain a satisfying behavior, the fuzzy logic typically needs to be trained with adequate input data D under controlled conditions.

Regardless of the specific outline of the vehicle 100, its body always has general front, top, rear, bottom and side surfaces. According to embodiments of the invention, a sensor area of the measurement zone may coincide with an exterior component of the body that faces upwards in such a manner that the sensor area forms a part of the general top surface, and/or forms a part of the general rear surface. In Figure 2, a first measurement zone 110a integrated in a roof window, a second measurement zone 110b integrated in a rear window and a third measurement zone 110c integrated in a boot gate represent examples of the former case, and the second measurement zone 110b integrated in the rear window represents an example of the latter case. Naturally, according to the invention, one or more measurement zones and one or more disrupting means may equally well be integrated into a side surface of the vehicle's 100 body.

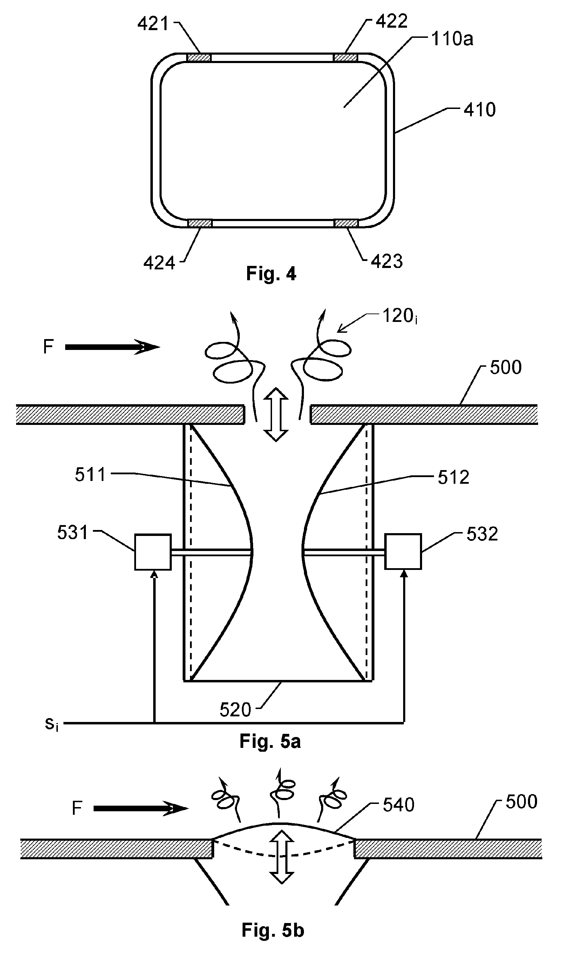

Figure 4 shows one embodiment of the proposed measurement zone. In the illustrated example, the proposed measurement zone 110a is implemented in a roof window. However, regardless of the specific implementation (e.g. in a rear window or a body panel), the measurement zone preferably includes an exchanging member 110a, which is movably attached to a frame member 410 of the body via at least one sensor member, here represented by 421, 422, 423 and 424 respectively, configured to register reciprocating movements of the exchanging member 110a relative to the frame member 410. Each of the sensor members 421, 422, 423 and 424 preferably contains a piezoelectric element plus first and second strips connected to the exchanging member 110a in such a way that a relatively large movement of the exchanging member 110a causes only a relatively small movement of the piezoelectric element. WO 03/088205 shows a device for executing the opposite operation, namely actuating a membrane included in a car window to cause the window to vibrate so as to generate sound. The window may thus function as a speaker for audio as well as anti-noise.

As is apparent from Figures 1 to 3, the disrupting means 120b may include a set of pulsator elements 120₁, 120₂, ..., 120ₙ. Figure 5a shows an example of such a pulsator element 120ᵢ according to a first embodiment of the invention. Here, the pulsator unit 120ᵢ has a cavity 520 with an opening towards an exterior surface of the body 500. The cavity 520 includes at least one wall containing a flexible membrane 511 and 512 respectively. The position of each flexible membrane 511 and 512 is configured to be manipulated in response to one of the at least one control signal sᵢ, so as to cause air to be sucked into or ejected from the cavity 520 depending on whether the flexible membranes 511 and 512 move towards or away from one another. In Figure 5a, the dashed lines designate the positions of the flexible membranes 511 and 512 when manipulated to allow a maximum amount of air into the cavity 520.

Preferably, the pulsator element 120ᵢ contains at least one piezoelectric element 531 and 532 configured to influence a position of the flexible membrane 511 and 512 respectively in response to the at least one control signal sᵢ.

Figure 5b shows a outermost part of a pulsator element 120ᵢ according to a second embodiment of the invention. The pulsator unit 120ᵢ may be equivalent to that in Figure 5a, i.e. include a cavity 520, where at least one wall contains a flexible membrane 511 and 512 as described above. However, here, instead of an opening towards an exterior surface of the body 500, a principal membrane 540 representing one of the at least one flexible membrane is arranged in parallel and essentially in level with the exterior surface of the body 500. The principal membrane 540 is configured to flex in and out relative to the exterior surface of the body 500 in response to at least one of the at least one control signal sᵢ. As a result, an air mass outside the body 500 is oscillated and energy is injected into the airflow F around the vehicle 100. This, in turn, causes the boundary air layer to vibrate, such that a flow separation line is shifted downstream in the direction of the airflow F along the body 500.

Analogous to the embodiment shown in Figure 5a, the pulsator element 120ᵢ may contain one or more piezoelectric elements 531 and 532 configured to influence a position of the flexible membrane 511 and 512 respectively in response to the at least one control signal sᵢ. A fluid medium (a gas or a liquid) inside the cavity 520 then acts on the principal membrane 540 to cause said flexion thereof relative to the exterior surface of the body 500. Alternatively, at least one piezoelectric element may be configured to directly influence the position of the principal membrane 540 (not shown).

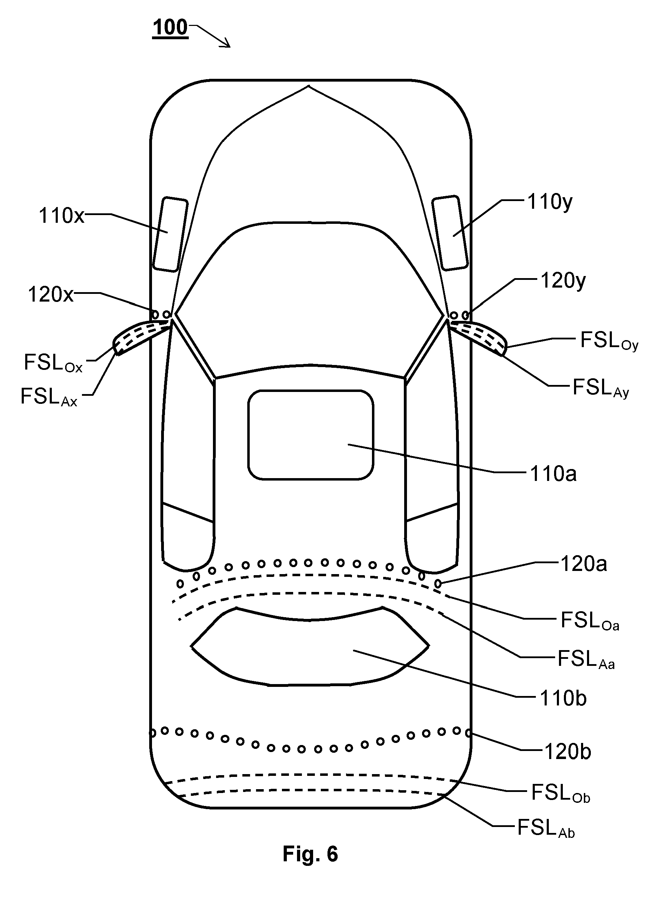

Figure 6 shows a top view of the ground vehicle according to a second embodiment of the invention. Here, it is acknowledged that the vehicle 100 is associated with more than one flow separation line. For illustration purposes, Figure 6 depicts four different flow separation lines, each having a respective original position for example at a left-side rearview mirror FSL_{Ox}, a right-side rearview mirror FSL_{Oy}, at a rear of a passenger compartment roof FSL_{Oa} and at a rear of a boot FSL_{Ob}. However, of course, according to the invention, any alternative number and positioning of the flow separation lines is likewise possible depending on the specific design of the vehicle's 100 body 500.

Analogous to the above, each of the flow separation lines designates a line along which a portion of the airflow F would detach if no energy had been injected into the airflow F around the vehicle 100. Respective measurement zones 110x, 110y, 110a and 110b and disrupting means 120x, 120y, 120a and 120b are arranged on the vehicle's 100 body 500 upstream of the original positions FSL_{Ox,} FSL_{Oy}, FSL_{Oa} and FSL_{Ob} for the flow separation lines.

The controller 330 is here configured generate the at least one control signal s₁, s₂, ..., sₙ, such that, in response to energy injected into the airflow F by the disrupting means 120x, 120y, 120a and 120b, the flow separation lines are shifted in relation to one another to attain a set of adjusted positions FSL_{Ax}, FSL_{Ay}, FSL_{Aa} and FSL_{Ab} respectively aiming at attaining an equilibrated air-pressure behind the vehicle 100. Typically, this means that all flow separation lines are shifted downstream relative to the airflow direction. However, in rare cases (depending on the body design and wind conditions), one or more flow separation lines may actually be shifted upstream.

The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures, but may be varied freely within the scope of the claims.

## Claims

1. A ground vehicle (100) having a body (500), the vehicle comprising:
a measurement zone (110a; 110b; 110c) configured to repeatedly register data (D) representing at least one characteristic parameter of an airflow (F) around the vehicle when the vehicle moves;
a controller (330) configured to receive said registered data (D), and in response thereto generate at least one control signal (s₁, s₂, ... , sₙ); and
at least one disrupting means (120b) configured to receive the at least one control signal (s₁, s₂, ..., sₙ), and based thereon perturbate the airflow (F) around the vehicle when the vehicle travels at a particular speed in a forward direction in such a manner that a drag on the vehicle is lower than if the vehicle had travelled at this speed in the forward direction without said at least one disrupting means (120b), the measurement zone (110a; 110b; 110c) being arranged upstream of each of the at least one disrupting means (120b) relative to a direction of the airflow (F), **characterized in that** the disrupting means (120b) comprises at least one flexible membrane (511, 512, 540) configured to be controlled so as to produce an oscillating air mass injecting energy into the airflow (F) around the vehicle so that a flow separation line is shifted from an original position (FSL_{Ob}) downstream in the direction of the airflow (F) along the body (500) to an adjusted position (FSL_{Ab}), the flow separation line representing a line along which the airflow (F) detaches from the body (500) and behind which air vortices (V) are created, and said original position (FSL_{Ob}) being the line along which the airflow (F) would detach if said energy had not been injected into the airflow (F) around the vehicle.

2. The ground vehicle (100) according to claim 1, wherein the vehicle is associated with two or more different flow separation lines, each having a respective original position (FSL_{Ox}, FSL_{Oy}, FSL_{Oa}, FSL_{Ob}) where a portion of the airflow (F) would detach if said energy had not been injected into the airflow (F) around the vehicle; and the controller (330) is configured to generate said at least one control signal (s₁, s₂, ..., sₙ) such that, in response to energy injected into the airflow (F) by the disrupting means (120x, 120y, 120a, 120b), the flow separation lines are shifted to a set of adjusted positions (FSL_{Ax}, FSL_{Ay}, FSL_{Aa}, FSL_{Ab}) where the flow separation lines are positioned relative to one another aiming at attaining an equilibrated air-pressure behind the vehicle.

3. The ground vehicle (100) according to claim 1 or 2, wherein the disrupting means (120b) is arranged upstream of said original position (FSL_{Ob}) for the flow separation line.

4. The ground vehicle (100) according to any one of the preceding claims, wherein the controller (330) is configured to repeatedly update the at least one control signal (s₁, s₂, ..., sₙ) in response to said registered data (D) from the measurement zone (110a; 110b; 110c).

5. The ground vehicle (100) according to claim 4, wherein the controller (330) is configured to:
predict an airflow state behind the vehicle based on said registered data (D),
compare the predicted airflow state with a desired airflow state behind the vehicle, and
generate each of the at least one control signal (s₁, s₂, ... , sₙ) with such respective value that a difference measure between the predicted and desired airflow states is expected to be minimized.

6. The ground vehicle (100) according to any one of the preceding claims, wherein the body (500) comprises general front, top, rear, bottom and side surfaces; a sensor area of the measurement zone coinciding with an exterior component (110a; 110b; 110c) of the body (500) facing upwards in such a manner that said sensor area forms a part of the general top surface.

7. The ground vehicle according to any one of claims 1 to 5, wherein the body (500) comprises general front, top, rear, bottom and side surfaces; a sensor area of the measurement zone coinciding with an exterior component (110b) of the body (500) facing rearward in such a manner that said sensor area forms a part of the general rear surface.

8. The ground vehicle according to any one of claims 6 or 7, wherein the measurement zone comprises an exchanging member (110a) movably attached to a frame member (410) of the body (500) via at least one sensor member (421, 422, 423, 424) configured to register reciprocating movements of said exchanging member (110a) relative to said frame member (410).

9. The ground vehicle (100) according to claim 8, wherein the at least one sensor member (421, 422, 423, 424) comprises a piezoelectric element and first and second strips connected to the exchanging member (110a) in such a way that a relatively large movement of the exchanging member (110a) causes a relatively small movement of the piezoelectric element.

10. The ground vehicle (100) according to any one of the preceding claims, wherein the disrupting means (120b) comprises at least one pulsator element configured to produce said oscillating air mass injecting energy into the airflow (F).

11. The ground vehicle (100) according to claim 10, wherein the disrupting means (120b) comprises a set of pulsator units (120₁, 120₂, ..., 120ₙ), each pulsator unit (120ᵢ) having a cavity (520) with an opening towards an exterior surface of the body (500), the cavity (520) including at least one wall comprising a flexible membrane (511, 512) the position of which is configured to be manipulated in response to one of the at least one control signal (sᵢ) so as to cause air to be sucked into or ejected from said cavity (520) depending on a movement direction of said flexible membrane (511, 512).

12. The ground vehicle (100) according to claim 11, wherein each pulsator unit (120ᵢ) comprises at least one piezoelectric element (531, 532) configured to influence a position of said flexible membrane (511, 512) in response to at least one of the at least one control signal (sᵢ).

13. The ground vehicle (100) according to any one of the preceding claims, wherein a principal membrane (540) of said at least one flexible membrane is arranged in parallel and essentially in level with an exterior surface of the body (500), the principal membrane (540) being configured to flex in and out relative to said exterior surface of the body (500) in response to at least one of the at least one control signal (sᵢ) so as to inject energy into the airflow (F) around the vehicle (100).
